# EUROPÄISCHE PATENTSCHRIFT

(11) **EP 0 451 308 B1**
(45) Veröffentlichungstag und Bekanntmachung des Hinweises auf die Patenterteilung: **01.03.1995**
(21) Anmeldenummer: 90106783.5
(22) Anmeldetag: 09.04.1990
(51) Int. Cl.: G01F 1/58, G01F 1/60

(54) **Schaltungsanordnung zur Messung des Stroms einer elektrische Ladungen enthaltenden Flüssigkeit**
Circuit arrangement to measure the flow of a fluid containing electrical charges
Agencement de circuit pour mesurer l'écoulement d'un fluide contenant des charges électriques

(43) Veröffentlichungstag der Anmeldung: 16.10.1991
(73) Patentinhaber: Fischer & Porter GmbH, D-37079 Göttingen (DE)
(72) Erfinder: Nissen, Peter, Dr., D-3405 Rosdorf (DE); Schwiderski, Hans W., D-3412 Nörten-Hardenberg (DE)
(74) Vertreter: Liska, Horst, Dr.-Ing.

(56) Entgegenhaltungen:
- DE-A- 2 448 945
- DE-A- 2 743 954
- US-A- 4 408 497
- PATENT ABSTRACTS OF JAPAN Band 7, Nr. 184 (P-216)(1329), 13. August 1983; & JP-A-5887418

## Beschreibung

Die Erfindung betrifft eine Schaltungsanordnung zur Messung des Stroms einer elektrische Ladungen enthaltenden Flüssigkeit nach dem Oberbegriff des Anspruchs 1.

Eine Schaltungsanordnung dieser Art ist nach der DE-OS 27 43 954 bekannt.

Insbesondere bei Verwendung einer solchen Schaltungsanordnung zur Messung von Abwasser, das das Rohrstück durchfließt, kommt es vor, daß das Rohrstück nicht völlig gefüllt ist. Um eine vollständige Füllung des Rohrstücks sicherzustellen, ist es deshalb erforderlich, eine Dückung (ein Syphon) vorzusehen, um sicherzustellen, daß das Rohrstück stets gefüllt ist. Eine solche Dückung hat jedoch den Nachteil, daß ein zusätzlicher Strömungswiderstand für die Flüssigkeit entsteht und daß außerdem die Baukosten für die Dückung, insbesondere bei sehr weiten Rohrstücken, erheblich sind.

Es ist bekannt, mehrere Elektrodenpaare vorzusehen, mittels denen eine gesonderte zusätzliche Messung des Flüssigkeitsstandes im Rohrstück möglich ist. Eine solche zusätzliche Flüssigkeitsstandsmessung ist jedoch aufwendig.

Aufgabe der Erfindung ist es, eine Schaltungsanordnung nach dem Oberbegriff des Anspruchs 1 anzugeben, die eine zusätzliche Flüssigkeitsstandsmessung erübrigt, auch wenn der Füllstand des Rohrstücks niedrig ist.

Die Lösung dieser Aufgabe ist in Anspruch 1 angegeben.

Die Erfindung wird nachstehend an einem Ausführungsbeispiel unter Hinweis auf die beigefügten Zeichnungen erläutert.

Fig. 1 zeigt eine Ausführungsform der Schaltungsanordnung.

Fig. 2 zeigt eine gegenüber Fig. 1 verschiedene Ausbildung der das Magnetfeld erzeugenden Magneten.

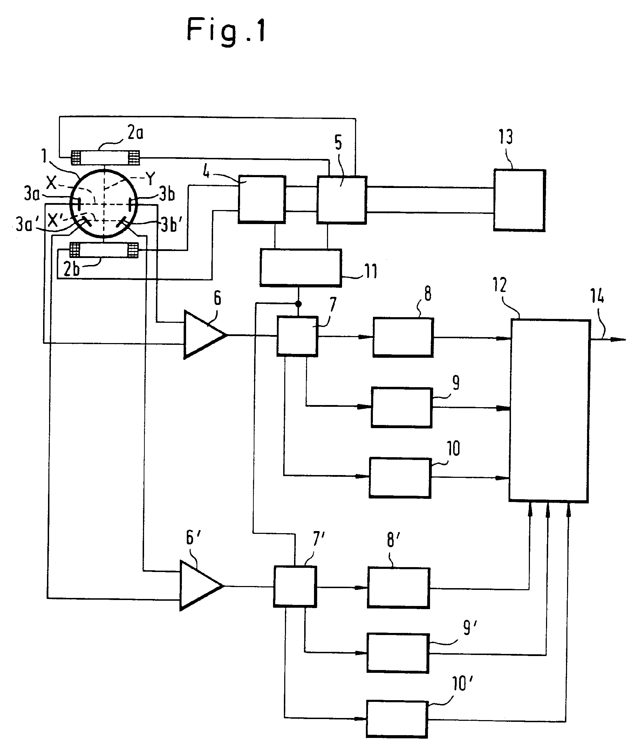

Fig. 1 zeigt ein innenseitig aus elektrisch isolierendem Material bestehendes Rohrstück 1 und zwei Elektromagnete 2a, 2b zur Erzeugung eines das Rohrstück 1 im wesentlichen diametral durchsetzenden Magnetfelds. Zwei von Ladungsverschiebungen in der Flüssigkeit beeinflußte Elektroden 3a, 3b liegen derart, daß ihre mittlere Verbindungslinie X den Strom im wesentlichen diametral zum Rohrstück 1 und im wesentlichen rechtwinklig zur mittleren Verbindungslinie Y zwischen den Elektromagneten 2a, 2b durchsetzt. Die Elektromagneten 2a, 2b sind über Ab-und Umpolschalter 4, 5 mit einem Versorgungsgerät 13 verbunden. Bei entsprechender Änderung der Schaltung können die Elektromagneten 2a, 2b auch hintereinander geschaltet sein, und es kann zur Änderung der Erregung des Elektromagneten 2a oder des Elektromagneten 2b jeweils eine Zusatzwicklung auf dem Elektromagneten 2a bzw. 2b vorgesehen sein, die eine zur Erregung der Hauptwicklung gegenpolige Erregung hervorruft. Die Elektroden 3a, 3b sind mit einem Signalverstärker 6 verbunden, dessen Ausgang an eine Signalweiche 7 angeschlossen ist. Ein Taktgeber 11 schaltet synchron die Umpolschalter/Abschalter 4, 5 zu Ausgangskanälen der Signalweiche 7, die z.B. zu einem Signalspeicher 8 bei gleichsinniger Polung der Elektromagneten 2a, 2b, zu einem Signalspeicher 9 bei gegensinniger Polung der Elektromagneten 2a,2b und zu einem Signalspeicher 10 bei abgeschaltetem Elektromagneten 2b führen. Die in den Signalspeichern 8, 9 und 10 gespeicherten Signale werden in einer Korrekturschaltung 12 mittels empirischer Parameter verarbeitet, so daß am Ausgang 14 der Korrekturschaltung 12 ein Signal auftritt, das im wesentlichen von Störungen des Strömungsprofils im Rohrstück 1, insbesondere von Abweichungen des Strömungsprofils von der Rotationssymmetrie, frei ist.

Unterhalb der Elektroden 3a, 3b sind zwei weitere von Ladungsverschiebungen in der Flüssigkeit beeinflußte Elektroden 3a′ und 3b′ angeordnet, deren mittlere Verbindungslinie X′ den Strom im wesentlichen quer zum Rohrstück 1 und im wesentlichen rechtwinklig zur mittleren Verbindungslinie Y zwischen den Magneten 2a, 2b durchsetzt. Der Taktgeber 11 schaltet überdies eine zweite Weiche 7′, die die von den zweiten Elektroden 3a′, 3b′ über einen Signalverstärker 6′ abgenommenen Meßspannungen in zweite Speicher 8′, 9′, 10′ leitet, die den speichern 8, 9, 10 entsprechen, also unterschiedlichen Schaltzuständen des Elektromagneten 2b. Die Ausgänge auch der Speicher 8′, 9′, 10′ sind an die Korrekturschaltung 12 zur Erzeugung des Ausgangssignals angeschlossen. Auch die in diesen Speichern 8′, 9′, 10′ gespeicherten Signalen werden in der Korrekturschaltung 12 mittels empirischer Parameter verarbeitet.

Bei der Ausführungsform nach Fig. 1 enthält die Schaltung ein gemeinsames Paar von Elektromagneten 2a, 2b.

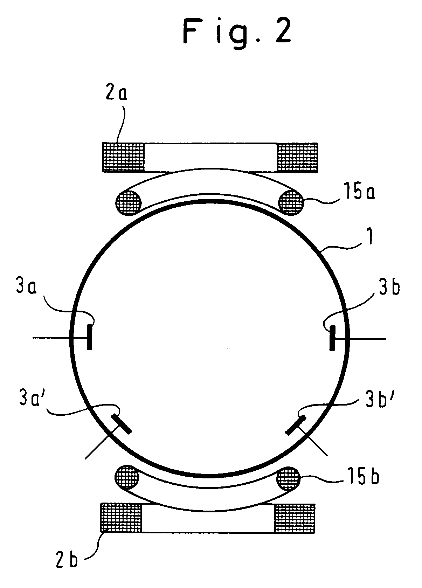

Bei der Ausführungsform nach Fig. 2 enthält die Schaltung unterschiedliche Elektromagneten 2a, 2b und 15a, 15b, von denen das Paar 15a, 15b für Teilfüllmessungen optimiert ist.

Die Wirkungsweise der Erfindung beruht darauf, daß ein induktiver Durchflußmesser bei Teilfüllung des Rohrstücks 1 einen abweichenden Meßwert anzeigt, was sich aus der durch die Teilfüllung gestörten Wertigkeitsverteilung im Rohrstück 1 ergibt.

Aus den von den Elektroden 3a, 3b und 3a′ und 3b′ und gegebenenfalls weiteren Elektroden abgegebenen Spannungen läßt sich auch der Füllstand im Rohrstück 1 ermitteln.

Nachfolgend werden Funktionen der beschriebenen Anordnung detailliert erläutert:
1. Betrieb mit dem Elektromagnetenpaar 2a, 2b und dem Elektrodenpaar 3a, 3b
   1.1 Anwendungskriterium
      Das Meßsystem wird in der Regel immer dann mit dem Elektromagnetenpaar 2a, 2b und dem Elektrodenpaar 3a, 3b gefahren, wenn das Rohrstück 1 ganz oder fast ganz mit Flüssigkeit gefüllt ist. Die hierfür erforderliche Füllhöhenermittlung leistet das System selbst-ständig. Das Elektromagnetenpaar 2a, 2b wird hinsichtlich der Magnetfeldverteilung in erster Linie für ein volles Rohrstück 1 optimiert. (Die Darstellung von ebenen Spule in Fig. 1 und Fig. 2 ist in diesem Zusammenhang unbedeutend).
   1.2 Folgende Meßzyklen (Taktfolgen) sind vorteilhaft:
      1.2.1 Taktfolge A
         1) Beide Elektromagneten 2a, 2b werden über eine volle Periode gleichzeitig und gleichsinnig erregt.
            Der in dieser Periode von dem Elektrodenpaar 3a, 3b ermittelte Meßwert wird über die Weiche 7 dem Speicher 8 zugeführt.
         2) Nur der Elektromagnet 2a wird über eine volle Periode erregt und der von dem Elektrodenpaar 3a, 3b ermittelte Meßwert über die Weiche 7 dem Speicher 9 zugeführt.
         3) Nur der Elektromagnet 2b wird über eine volle Periode erregt und der von dem Elektrodenpaar 3a, 3b ermittelte Meßwert über die Weiche 7 dem Speicher 10 zugeführt.

   Die Reihenfolge der Schritte 1) bis 3) ist beliebig änderbar.
   Taktfolge B
   1) Beide Elektromagneten 2a, 2b werden über eine volle Periode gleichzeitig und gleichsinnig erregt.
      Der in dieser Periode von dem Elektrodenpaar 3a, 3b ermittelte Meßwert wird über die Weiche 7 dem Speicher 8 zugeführt.
   2) Beide Elektromagneten 2a, 2b werden über eine volle Periode gleichzeitig und gegensinnig erregt.
      Der in dieser Periode von dem Elektrodenpaar 3a, 3b ermittelte Meßwert wird über die Weiche 7 dem Speicher 9 zugeführt.
      Der Speicher 10 wird bei dieser Taktfolge nicht benötigt.
2. Betrieb mit dem Elektromagnetenpaar 2a, 2b und dem Elektrodenpaar 3a′, 3b′
   2.1 Anwendungskriterium
      Das Meßsystem wird in der Regel immer dann mit dem Elektromagnetenpaar 2 und dem Elektrodenpaar 3′ gefahren, wenn das Rohrstück 1 nur teilweise gefüllt ist, insbesondere bei Füllhöhen kleiner 50%, denn in diesem Fall kann mit dem Elektrodenpaar 3a, 3b keine Meßspannung mehr registriert werden. Die Einbauhöhe des Elektrodenpaars 3a′, 3b′ bestimmt die untere Grenze der Füllhöhe, bei der das System noch messen kann.
   2.2 Folgende Meßzyklen (Taktfolgen) sind vorteilhaft:
      2.2.1 Taktfolge A
         1) Beide Elektromagneten 2a, 2b werden über eine volle Periode gleichzeitig und gleichsinnig erregt.
            Der in dieser Periode von dem Elektrodenpaar 3′ ermittelte Meßwert wird über die Weiche 7′ dem Speicher 8′ zugeführt.
         2) Nur der Elektromagnet 2a wird über eine volle Periode erregt und der von dem Elektrodenpaar 3a′, 3b′ ermittelte Meßwert über die Weiche 7′ dem Speicher 9′ zugeführt.
         3) Nur der Elektromagnet 2b wird über eine volle Periode erregt und der von dem Elektrodenpaar 3′ ermittelte Meßwert über die Weiche 7′ dem Speicher 10′ zugeführt.

         Die Reihenfolge der Schritte 1) bis 3) ist beliebig änderbar.
      2.2.2 Taktfolge B
         1) Beide Elektromagneten 2a, 2b werden über eine volle Periode gleichzeitig und gleichsinnig erregt.
            Der in dieser Periode von dem Elektrodenpaar 3a′, 3b′ ermittelte Meßwert wird über die Weiche 7′ dem Speicher 8′ zugeführt.
         2) Beide Elektromagneten 2a, 2b werden über eine volle Periode gleichzeitig und gegensinnig erregt. Der in dieser Periode von dem Elektrodenpaar 3a′, 3b′ ermittelte Meßwert wird über die Weiche 7′ dem Speicher 9′ zugeführt.
            Der Speicher 10′ wird bei dieser Taktfolge nicht benötigt.
3. Betrieb mit dem Elektromagnetenpaar 15a, 15b und dem Elektrodenpaar 3a′, 3b′
   3.1 Anwendungskriterium
      Das Meßsystem kann alternativ dann mit dem Elektromagnetenpaar 15a, 15b und dem Elektrodenpaar 3a′, 3b′ gefahren werden, wenn das Rohrstück 1 nur teilweise gefüllt ist.
      Dies entspricht somit den Verhältnissen in Abschnitt 2 mit dem Unterschied, daß ein anderes Paar von Elektromagneten verwendet wird. Das Elektromagnetenpaar 15a, 15b unterscheidet sich von dem Elektromagnetenpaar 2a, 2b hinsichtlich der Magnetfeldverteilung dadurch, daß es für teilgefüllte Rohrstücke 1 optimiert ist.
   3.2 Folgende Meßzyklen (Taktfolgen) sind vorteilhaft:
      3.2.1 Taktfolge A
         1) Beide Elektromagneten 15a, 15b werden über eine volle Periode gleichzeitig und gleichsinnig erregt.
            Der in dieser Periode von dem Elektrodenpaar 3a′, 3b′ ermittelte Meßwert wird über die Weiche 7′ dem Speicher 8′ zugeführt.
         2) Nur der Elektromagnet 15a wird über eine volle Periode erregt und der von dem Elektrodenpaar 3a′, 3b′ ermittelte Meßwert wird über die Weiche 7′ dem Speicher 9′ zugeführt.
         3) Nur der Elektromagnet 15b wird über eine volle Periode erregt und der von dem Elektrodenpaar 3′ ermittelte Meßwert über die Weiche 7′ dem Speicher 10′ zugeführt.

         Die Reihenfolge der Schritte 1) bis 3) ist beliebig änderbar.
      3.2.2 Taktfolge B
         1) Beide Elektromagneten 15a, 15b werden über eine volle Periode gleichzeitig und gleichsinnig erregt.
            Der in dieser Periode von dem Elektrodenpaar 3a′, 3b′ ermittelte Meßwert wird über die Weiche 7′ dem Speicher 8′ zugeführt.
         2) Beide Elektromagneten 15a, 15b werden über eine volle Periode gleichzeitig und gegensinnig erregt. Der in dieser Periode von dem Elektrodenpaar 3a′, 3b′ ermittelte Meßwert wird über die Weiche 7′ dem Speicher 9′ zugeführt. Der Speicher 10′ wird bei dieser Taktfolge nicht benötigt.

Mit der mehrfach genannten Optimierung des Magnetfelds ist folgendes gemeint:

Wie Fig. 2 zeigt, hat die Spule 15a einen kleineren Durchmesser als die Spule 15b. Infolgedessen ist das Magnetfeld im oberen Bereich des Rohrstücks 1 stärker als im unteren Bereich des Rohrstücks 1. Dieses qualitative Merkmal ist maßgeblich für die "Optimierung": Das Magnetfeld wird in der Längsmittelebene des Rohrstücks 1 von oben nach unten schwächer.

## Patentansprüche

1. Schaltungsanordnung zur Messung des Stroms einer elektrische Ladungen enthaltenden Flüssigkeit, die ein wenigstens innenseitig aus elektrisch isolierendem Material bestehendes Rohrstück (1) durchfließt, mit wenigstens zwei Magneten (2a, 2b), von denen wenigstens einer ein Elektromagnet ist, zur Erzeugung eines den Strom im wesentlichen diametral zum Rohrstück (1) durchsetzenden Magnetfeldes und mit zwei von Ladungsverschiebungen in der Flüssigkeit beeinflußten Elektroden (3a, 3b), deren mittlere Verbindungslinie (X) den Strom im wesentlichen quer zum Rohrstück (1) und im wesentlichen rechtwinklig zur mittleren Verbindungslinie (Y) zwischen den Magneten (2a, 2b) durchsetzt, bei der ein Taktgeber (11) vorgesehen ist, der in einer vorgegebenen Taktfolge einerseits einen bzw. mehrere Umpolschalter/Abschalter (4, 5) für den bzw. die Elektromagneten (2a, 2b) schaltet und andererseits eine Weiche (7) schaltet, die die von den Elektroden (3a, 3b) abgenommenen Meßspannungen in erste Speicher (8, 9, 10) leitet, welche Speicher unterschiedlichen Schaltzuständen eines der Elektromagneten (2a, 2b) entsprechen, und bei der die Ausgänge dieser Speicher (8, 9, 10) an eine Korrekturschaltung (12) angeschlossen sind, die die gespeicherten Signale mittels empirischer Parameter zu einem Ausgangssignal verarbeitet,
**dadurch gekennzeichnet,**
daß bei horizontalem Verlauf der mittleren Verbindungslinie (X) der Elektroden (3a, 3b) unterhalb dieser Elektroden (3a, 3b) mindestens zwei weitere von Ladungsverschiebungen in der Flüssigkeit beeinflußte Elektroden (3a′, 3b′) angeordnet sind, deren mittlere Verbindungslinie (X′) den Strom im wesentlichen quer zum Rohrstück (1) und im wesentlichen rechtwinklig zur mittleren Verbindungslinie (Y) zwischen den Magneten (2a, 2b) durchsetzt,
daß der Taktgeber (11) überdies eine zweite Weiche (7′) schaltet, die die von den zwei weiteren Elektroden (3a′, 3b′) abgenommenen Meßspannungen in zweite Speicher (8′, 9′, 10′) leitet, welche zweite Speicher unterschiedlichen Schaltzuständen eines der Elektromagneten (2a, 2b) entsprechen, und daß die Ausgänge auch dieser zweiten Speicher (8′, 9′, 10′) an die Korrekturschaltung (12) zur Erzeugung des Ausgangssignals angeschlossen sind, wobei die Korrekturschaltung (12) auch die in diesen zweiten Speichern (8′, 9′, 10′) gespeicherten Signalen mittels empirischer Parameter zu dem Ausgangssignal verarbeitet.

## Claims

1. A circuit arrangement for measuring the flow of an electrically charged fluid which passes through a tube section (1), at least the inside of which is made of electrically insulating material, comprising at least two magnets (2a, 2b), at least one of which is an electromagnet, for producing a magnetic field, which penetrates the flow substantially diametrally with respect to the tube section (1), and comprising two electrodes (3a, 3b) influenced by charge displacements in the fluid and whose central connecting line (X) penetrates the flow substantially transversely, relative to the tube section (1) and substantially perpendicularly, with respect to the central connecting line (Y) between the magnets (2a, 2b), in which circuit arrangement a clock generator (11) is provided which, on the one hand, switches, in a specified clock sequence, one or more reversing/disconnecting switch(es) (4, 5) for the electromagnet(s) (2a, 2b) and, on the other hand, switches a filter (7) which guides the measuring voltages picked up from the electrodes (3a, 3b) into first stores (8, 9, 10), which stores correspond to different switching states of one of the electromagnets (2a, 2b),
in which circuit arrangement the outputs of said stores (8, 9, 10) are connected to a correction circuit (12) which converts the stored signals into an output signal, using empiric parameters, characterised in that, when the central connecting line (X) of the electrodes (3a, 3b) extends horizontally, at least two further electrodes (3a′, 3b′) influenced by charge displacements in the fluid are arranged below the electrodes (3a, 3b), the central connecting line (X′) of the further electrodes (3a′, 3b′) penetrating the stream substantially transversely, relative to the tube section (1), and substantially perpendicularly, relative to the central connecting line (Y) between the magnets (2a, 2b),
in that the clock generator (11) also switches a second filter (7′) which guides the measuring voltages picked up from the two further electrodes (3a′, 3b′) into second stores (8′, 9′, 10′), which second stores correspond to different switching states of one of the electromagnets (2a, 2b),
and in that the outputs of said second stores (8′, 9′, 10′), too, are connected to the correction circuit (12) for producing the output signal, the correction circuit (12) also converting the signals stored in said second stores (8′, 9′, 10′) into the output signal, using empiric parameters.

## Revendications

1. Agencement de circuit pour la mesure de l'écoulement d'un fluide contenant des charges électriques, qui passe dans une section de tube (1) constituée au moins sur son côté interne en un matériau électriquement isolant, comprenant au moins deux aimants (2a, 2b) dont l'un au moins est un électroaimant pour produire un champ magnétique qui traverse le courant sensiblement diamétralement par rapport à la section de tube (1) et deux électrodes (3a, 3b) soumises à l'influence des déplacements de la charge dans le fluide, dont la ligne de liaison centrale (X) croise le courant sensiblement transversalement à la section de tube (1) et sensiblement à angle droit par rapport à la ligne de liaison centrale (Y) entre les électroaimants (2a, 2b), dans lequel est prévu un générateur de rythme (11) qui commute selon une succession de pas d'une part un ou plusieurs inverseurs de polarité/interrupteurs (4, 5) pour le ou les électroaimants (2a, 2b) et d'autre part un dispositif d'aiguillage (7) qui dirige les tensions de mesure prélevées des électrodes (3a, 3b) vers des premières mémoires (8, 9, 10), qui correspondent à des mémoires d'états de commutation différents de l'un des deux électroaimants (2a, 2b), et dans lequel les sorties de ces mémoires (8, 9, 10) sont raccordées à un circuit de correction (12) qui traite les signaux mis en mémoire au moyen de paramètres empiriques en un signal de sortie,
caractérisé en ce que, lorsque la ligne de liaison centrale (X) entre les électrodes (3a, 3b) est horizontale, sont prévues au moins deux autres électrodes (3a′, 3b′) soumises à l'influence des déplacements de la charge dans le fluide, dont la ligne de liaison centrale (X′) croise le courant sensiblement transversalement à la section de tube (1) et sensiblement à angle droit par rapport à la ligne de liaison centrale (Y) entre les aimants (2a, 2b),
en ce que le générateur de rythme (11) commute en outre un second dispositif d'aiguillage (7′) qui dirige les tensions de mesure prélevées des deux autres électrodes (3a′, 3b′) vers des secondes mémoires (8′, 9′, 10′), lesquelles secondes mémoires correspondent à des états de commutation différents de l'un des électroaimants (2a, 2b),
et en ce qu'également les sorties de ces secondes mémoires (8′, 9′, 10′) sont raccordées au circuit de correction (12) pour produire le signal de sortie, le circuit de correction (12) traitant également les signaux emmagasinés dans ces secondes mémoires (8′, 9′, 10′) au moyen de paramètres empiriques pour obtenir le signal de sortie.
